Europäisches Patentamt

European Patent Office

Office européen des brevets

(11) Veröffentlichungsnummer: **0 479 398 A1**

# (12) EUROPÄISCHE PATENTANMELDUNG

(21) Anmeldenummer: **91250046.9**

(22) Anmeldetag: **18.02.91**

(51) Int. Cl.⁵: **B65G 59/06**, B65G 57/06

(30) Priorität: **11.09.90 EP 90250230**

(43) Veröffentlichungstag der Anmeldung:
**08.04.92 Patentblatt 92/15**

(84) Benannte Vertragsstaaten:
**FR GB IT SE**

(71) Anmelder: **RATIOTECHNIK GmbH**
**Friedrich-Engels-Strasse 12**
**O-1950 Neuruppin(DE)**

(72) Erfinder: **Schröder, Thomas**
**Am Tierpark 9**
**W-1136 Berlin(DE)**
Erfinder: **Poldrack, Dieter**
**Schinkelstrasse 13**
**W-1950 Neuruppin(DE)**
Erfinder: **Rönsch, Joachim**
**Rudolf-Seiffert-Strasse 38**
**W-1156 Berlin(DE)**
Erfinder: **Porth, Hans-Joachim**
**Wühlischstrasse 57**
**W-1035 Berlin(DE)**

(74) Vertreter: **Scholz, Hartmut, Dipl.-Ing.**
**Bundesallee 74**
**W-1000 Berlin 41 (Friedenau)(DE)**

(54) Vorrichtung zum Stapeln plattenförmiger Werkstücke, insbesondere plattenförmiger Werkstückstapel.

㊳ Vorrichtung zum Stapeln plattenförmiger Werkstücke, insbesondere von plattenförmigen Werkstückstapeln, bei der eine mit einer rutschfesten Oberfläche versehene, angetriebene Einlaufwalze (1) und ein in Bewegungsrichtung (18) der Werkstücke (9) hinter der Einlaufwalze (1) von dieser horizontal weg- und zurückbewegbarer (19) Schlitten (3) vorgesehen sind. Bei Wegbewegung ist der Schlitten (3) mit einer der Umfangsgeschwindigkeit der Einlaufwalze (1) synchronen Geschwindigkeit bewegbar. Dem Schlitten (3) ist an dem der Einlaufwalze (1) zugewandten Ende eine Stützrolle (4) und ein mit einer Anlagefläche (7) versehener Anschlag (6) zugeordnet. Die Anlagefläche (7) des Anschlags (6) reicht bis nahe an die Stützrolle (4) heran und verläuft parallel zu der senkrechten Mittellinie (8) der Stützrolle (4) und zwischen dieser und der der Einlaufwalze (1) nahen Tangente (17) der Stützrolle (4) im wesentlichen senkrecht. In Bewegungsrichtung ist unmittelbar hinter der Einlaufwalze (1) ein von dem Schlitten (3) mit der Stützrolle (4) überfahrbarer Ablagetisch (10) vorgesehen.

Die Erfindung betrifft eine Vorrichtung zum Stapeln plattenförmiger Werkstücke und insbesondere plattenförmiger Werkstückstapel.

Eine derartige Vorrichtung soll insbesondere zum Stapeln von Plattenstapel unbeschichteter Möbelspanplatten hinter einer Plattenaufteilsäge in der Möbelindustrie angewendet werden. dazu ist es bekannt, plattenförmige Werkstücke von Hand zu stapeln. Ferner ist es bekannt, hierfür Industrieroboter zu verwenden, die mit pneumatischen, elastomeren Saugnäpfen versehen sind. Derartige Stapelgeräte sind aber nur in der Lage, Einzelplatten zu handhaben.

In der Möbelindustrie werden hinter leistungsfähigen Aufteilautomaten häufig Stapel plattenförmigen Materials, insbesondere beschichtete und unbeschichtete Möbelspanplatten, von Hand gebildet, wobei es sich um eine sehr schwere manuelle Arbeit handelt.

Das maschinelle Stapeln hinter Aufteilautomaten erfordert eine hohe Flexibilität der Stapelanlage, da wegen der notwendigen hohen Materialausnutzung, kurzer Liefer- und Verarbeitungsdispositionen und dgl., komplizierte Aufteilbilder zu realisieren sind. Besonders schwierig ist es, Abstapelanlagen zu schaffen, die die Abstapelung mit einer Geschwindigkeit bewältigen, die eine vollständige Auslastung der Kapazität der Aufteilautomaten ermöglicht.

Aus der DD-PS 233 741 ist eine Stapeleinrichtung für plattenförmige Bauteile bzw. Bauteilstapel bekannt, bei der über einen Rollenbahntisch mit seperat ansteuerbaren Rollenbahnsektoren, Stoppern, Hubbolzen und Endschaltern ein sowohl im Bereich des Tisches als auch im Bereich äußerer Zielpunkte dreidimensional verfahrbar, um 90° drehbarer Greifer angeordnet ist, der aus einem Paar aufeinander zustellbarer Platten besteht. An der Unterkante der Platten sind längs einer gemeinsamen Achse schwenkbare winkelförmige Auflagestützen vorgesehen, die die Platten untergreifen können. Die Stapelleistung dieser Anlage ist wegen der notwendigen Vertikal- und Horizontalbewegungen des Greifers und der zum Abstapeln einzelner Formate zurücklegenden Wege gering. Außerdem sind Beschädigungen der Werkstückoberfläche, insbesondere wenn es sich um beschichtete Möbelspanplatten handelt, beim Wegschwenken der Auflagestützen nicht auszuschließen, wenn Plattenstapel aufeinandergelegt werden.

Aus der Literatur (Transport- und Lagertechnik, Heft 10, 1980, S. 33) ist eine Fixmaßanlage bekannt, bei der längs hinter einer Aufteilsäge ein Sammeltisch und dahinter ein Ablegefeld angeordnet sind. Parallel dazu ist ein Stapelwagen auf Schienen im Übernahme- und Ablagebereich verschiebbar.

Das von der Aufteilsäge kommende Aufteilbild der Plattenpakete wird auf dem Sammeltisch positioniert und von diesem mittels Paketschubeinrichtungen auf einem Stapelwagen abgeschoben. Der Stapelwagen ist zur Anpassung an die konstante Übernahmehöhe vom Sammeltisch und die veränderliche Abschubhöhe im Bereich der des Ablagefeldes höhenverstellbar. Auf dem Stapelwagen ist ferner eine Längsschubeinrichtung angeordnet, mit der die abzustapelnden Plattenpakete auf einem zum Stapelwagen gehörenden Tablett-Abschubtisch bewegt werden. Mittels einer Querschubeinrichtung des Tablett-Abschubtisches werden die queraufgeteilten Plattenpakete des Aufteilbildes auf das Ablagefeld geschoben. Letzteres ist rechen- oder tablettartig ausgebildet, wobei die Fixmaßstapel von speziellen, ebenfalls rechen- oder tablettartigen Aufnahmen aufweisenden Gabelstaplern aufgenommen und dem weiteren Transportprozeß zugeführt werden. Der Nachteile dieser Anlage bestehen insbesondere in dem großen Platzbedarf, geringer Flexibilität und Stapelleistung und großen Schwierigkeiten beim Abstapeln komplizierter Aufteilbilder, wobei das Abstapeln kleiner Plattenformate besondere Probleme bereitet, da kleinflächige Plattenstapel mit den Gabelstaplern nicht aufgenommen werden können. Beschichtete Werkstücke können wegen der Bewegungen durch die Längs- und Querschubeinrichtungen außerdem kaum gehandhabt werden, ohne daß Oberflächenbeschädigungen auftreten.

Ein weiteres Abstapelsystem ist aus der Literatur (Holz als Roh- und Werkstoff, Heft 41, 1983, S. 363-367) bekannt. Dabei werden aufgeteilte Plattenpakete zur Stapelstation transportiert und von dieser abgestoppt. Der Quertransport zur Stapelstation erfolgt mittels Riemenförderer. Von diesem werden die plattenförmigen Werkstücke durch eine rechenartige Aushebevorrichtung abgehoben und um etwa 90° gekippt auf dem Stapelwagen abgesetzt. Der auf geneigten Schienen fahrbare Stapelwagen fährt sodann um die aufgesetzte Plattenhöhe zurück. Anschließend schwenkt die Aushebevorrichtung in den Riemenförder zurück, und der nächste Plattenstapel kann in die Stapelstation einlaufen. Sobald die gewünschte Stapelhöhe erreicht ist, fährt der Stapelwagen weiter in die Endstellung zurück und wird dort durch Hydraulikzylinder aufgerichtet, so daß der Stapel dann wieder senkrecht steht.

Beim Überschreiten der bestimmten Stapelhöhe fährt die Aushebevorrichtung so weit zurück, daß die zuviel auf dem Stapel aufgesetzten Platten geringfügig vom Stapelwagen abgehoben werden. Beim Verfahren des Stapelwagens in die Endstellung stützen sich die zurückgehaltenen Platten an der Oberkante an Rückhaltefingern eines Lineals ab, die vorher automatisch auf die jeweilige Zuschnittbreite eingefahren wurden. Beim nachfolgen-

3

den Stapelprozeß werden die zuvor zurückgehaltenen Platten dann als erste auf dem Stapelwagen abgesetzt. Die Nachteile auch dieser Anlage sind insbesondere im hohen technischen Aufwand, geringer Flexibilität sowie hohem Platzbedarf zu sehen. Außerdem sind zum Stapeln viele Bewegungen der Platten, wie Längs- und Quertransport, Anheben und Kippen, erforderlich, woraus eine geringe Stapelleistung resultiert. Schließlich ist die Gefahr von Oberflächenbeschädigungen bei Stapeln beschichteter Werkstücke groß.

Aus der Literatur (Holz als Roh- und Werkstoff, Heft 39, 1981, S. 320) ist ferner eine Stapelanlage für rohe und beschichtete Platten bekannt, die in ein System, bestehend aus Querschnittsäge, Zwischentisch, Längs- und Quertransporteinrichtungen und Transporteinrichtungen zum Fördern der Fixmaßstapel, eingebunden ist. Die Fixmaßstapelstation ist dabei insbesondere durch zwei parallele Träger gekennzeichnet, die mit sogenannten Führungsstäben und Bordscheibenrollen zu versehen sind. Die zur Scheibenaußenkante hin nach unten abgeschrägten Bordscheibenrollen tragen und fördern die Plattenpakete über die Stapelstation und berühren dabei nicht die Fläche der unteren Platte, sondern lediglich die untere Kante ihrer Schnittfläche. Zur Aufnahme des zu transportierenden Plattenpaketes schwenken die mit dem Bordscheibenrollen bestückten Führungsstäbe seitlich zum Paket hin, nehmen diese auf und bewegen es in Richtung der jeweiligen für die Plattenabmessung vorgesehenen Stapelstation. Zur Ablage schwenken die Führungsstäbe von dem Paket weg, sobald das Paket über der Stapelstation angekommen ist. Andere Pakete können dabei auf den Bordscheibenrollen zu anderen Stapelstationen in dichter Folge nachlaufen.

Eine der beiden Schienen, die die Führungsstäbe und Bordscheibenrollen tragen, ist entsprechend der Länge der jeweiligen Stapelstation geteilt und dieser beweglich zugeordnet. Beim Abstapeln der Pakete durch Wegschwenken der Bordscheibenrollen fallen die Pakete wenige Zentimeter nach unten, wobei hinsichtlich der Beschädigung der Platten kaum Probleme auftreten. Bei weniger hohen Sortieransprüchen können beide Schienen ungeteilt sein.

Die vorstehend beschriebene Stapelstation ist gekennzeichnet durch hohen technischen Aufwand. Sie ermöglicht aber eine hohe Stapelleistung bei gleichseitig schonender Handhabung der Plattenpakete. Die Belastung der untersten Platte beim Transport und Wegschwenken der Bordscheibenrollen, insbesondere bei hohen und schweren Stapeln, kann aber so anwachsen, daß eine Beschädigung der untersten Platten, wenn diese beschichtet ist, nicht völlig auszuschließen ist. Nachteilig ist es ferner, daß eine Stapelstation ohne Umrüstaufwand immer nur ein Plattenformat, insbesondere ein Längsformat, abstapeln kann.

Ziel der Erfindung ist es, eine Vorrichtung zum Stapeln plattenförmiger Werkstücke, insbesondere plattenförmiger Werkstückstapel, so auszubilden, daß eine schonende Handhabung der Werkstücke mit großer Variabilität, Stapelleistung und geringem Aufwand sowie Platzbedarf erreichbar ist.

Der Erfindung liegt die Aufgabe zugrunde, eine Vorrichtung zum Stapeln plattenförmiger Werkstücke und insbesondere plattenförmiger Werkstückstapel zu schaffen, die ohne Umrüstungsaufwand die unterschiedlichsten Plattemformate abstapeln kann, Oberflächen- und Kantenbeschädigungen ausschließt, überfahrbar und gut in Plattenaufteil- und Plattentransportsysteme integrierbar ist.

Gelöst wird diese Aufgabe dadurch, daß eine mit einer rutschfesten Oberfläche versehene, angetriebene Einlaufwalze vorgesehen ist, daß in Bewegungsrichtung der Werkstücke hinter der Einlaufwalze ein von dieser horizontal weg- und zurückbewegbarer Schlitten vorgesehen ist, der bei Wegbewegung mit einer der Umfangsgeschwindigkeit der Einlaufwalze synchronen Geschwindigkeit bewegbar ist, daß dem Schlitten an dem der Einlaufwalze zugewandten Ende eine Stützrolle und ein mit einer Anlagefläche versehener Anschlag zugeordnet sind, wobei die Anlagefläche des Anschlags bis nahe an die Stützrolle heranreicht und parallel zu der senkrechten Mittellinie der Stützrolle und zwischen dieser und der der Einlaufwalze nahen Tangente der Stützrolle im wesentlichen senkrecht verläuft, und daß in Bewegungsrichtung unmittelbar hinter der Einlaufwalze ein von dem Schlitten mit der Stützrolle überfahrbarer Ablagetisch vorgesehen ist.

Zur vorteilhaften Ausgestaltung ist es vorgesehen, daß auf dem Schlitten eine Traverse angeordnet ist, die so hoch ist, daß ein Durchlauf der abzustapelnden Werkstücke möglich ist. An der Anlagefläche in Einrückstellung bis nahe an die Stützrolle heranreicht, wobei die Anschlagfläche parallel zur senkrechten Mittellinie der Stützrolle liegt. Unmittelbar hinter der Einlaufwalze ist ein vom Schlitten mit Stützrolle überfahrbarer und höhenverstellbarer Ablagetisch angeordnet.

Zweckmäßigerweise sind der Durchmesser und der durch die Druckbeaufschlagung zurückgelegte Weg der Andrückrolle in Richtung der Einlaufwalze so dimensioniert, daß deren Wirkung auf die oberste Platte des Plattenstapels solange anhält, bis dessen hintere untere Kante mit der Einlaufwalze eines kreisförmigen Weg zurückgelegt hat, der bei einer Drehung der Einlaufwalze um etwa 15° entspricht.

Im Sinne der Erfindung ist es, daß der Durchmesser der Stützrolle etwa 60% des Durchmessers der Einlaufwalze beträgt. Die Anschlagfläche ist in Einrückstellung des Anschlages zweckmäßigerweise in einem Abstand von etwa 40% des Radiusses der Stützrolle von der senkrechten Mittellinie derselben angeordnet.

In weiterer Ausgestaltung können die Einlaufwalze und Stützrolle aus im Abstand zueinander stehenden und gemeinsam drehbaren koaxialen Einzelwalzen bzw. Einzelrollen gleichen Durchmessers zusammengesetzt sein.

Schließlich ist es möglich, daß die Stützrolle aus im Abstand zueinander stehenden koaxialen Einzelrollen gleichen Durchmessers zusammengesetzt ist, die unabhängig voneinander drehbar sind.

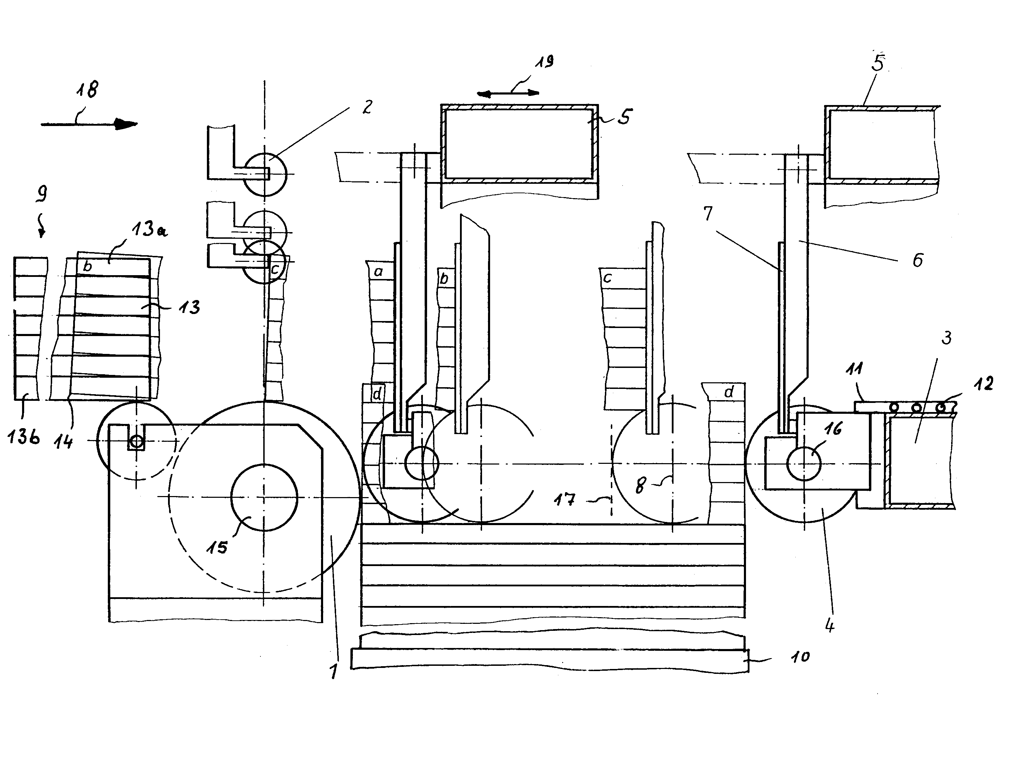

Weitere vorteilhafte Maßnahmen sind in den Unteransprüchen beschrieben. Die Erfindung ist anhand eines Ausführungsbeispiels in der beiliegenden Zeichnung dargestellt und wird nachfolgend näher beschrieben. In der einzigen Figur der zugehörigen Zeichnung ist eine Seitenansicht der Vorrichtung in Warte- und Endstellung schematisch dargestellt, wobei zusätzlich mit dünnen Linien einige Zwischenstellungen angedeutet sind.

Ein von einer nicht dargestellten Plattenaufteilsäge über eine Transporteinrichtung, beispielsweise eine Rollenbahn, kommender Stapel 9 plattenförmiger Werkstücke oder auch parallel nebeneinander liegende Stapel 9 laufen auf eine angetriebene Einlaufwalze 1 der Vorrichtung zum Stapeln auf. Die Einlaufwalze 1 ist mit einer rutschfesten Oberfläche versehen. Sie kann auch aus mehreren auf einer Welle 15 angeordneten und gemeinsam angetriebenen schmalen, mit Abstand zueinander angeordneten Einzelwalzen gleichen Durchmessers zusammengesetzt sein.

Horizontal über der Einlaufwalze 1 sind eine oder mehrere koaxiale aus- und einrückbare Andrückrollen 2 positioniert, die unmittelbar nach dem Auflaufen des Stapels 9 auf die Einlaufwalze 1 auf die oberste Platte 13a aufsetzbar sind. Dadurch wird die sichere Positionierung der Einzelplatten 13 zueinander verbessert und außerdem einer Gleitreibung zwischen der unteren Platte 13 und der Einlaufwalze 1 zusätzlich entgegengewirkt.

Der Durchmesser der Andrückrolle 2 ist kleiner, als der der Einlaufwalze 1. Der Durchmesser der Andrückrolle 2 und deren kraftbeaufschlagter Weg in Richtung der Einlaufwalze 1 sind so dimensioniert, daß die Wirkung der Andrückrolle 2 auf die oberste Kante des Plattenstapels 9 anhält, bis die hintere untere Kante 14 des Stapels 9 mit der Mantelfläche der Einlaufwalze 1 einen kreisbogenförmigen Weg zurückgelegt hat, der bei einer Drehung der Einlaufwalze 1 um etwa 15° entspricht.

In Bewegungsrichtung 18 (Pfeil) der Plattenstapel ist hinter der Einlaufwalze 1 ein Schlitten 3 angeordnet, der horizontal von der Einlaufwalze 1 weg und wieder zurückbewegt werden kann (Pfeil 19). Dieser Schlitten 3 weist an seinem zur Einlaufwalze 1 weisenden Ende eine Stützrolle 4 auf, die mit einer rutsch- und abriebfesten Oberfläche versehen und und frei drehbar, d.h. nicht angetrieben ist. Auch die Stützrolle 4 kann aus mehreren schmalen Einzelrollen gleichen Durchmessers bestehen, die mit Abstand zueinander auf einer Welle 16 gemeinsam drehbar angeordnet sind.

Die Stützrolle 4 hat einen kleineren Durchmesser als die Einlaufwalze 1, wobei die horizontale Tangente der Einlaufwalze 1 und Stützrolle 4 exakt in einer Ebene liegen. Das gleiche gilt auch für Rollenbahn 11, die auf dem Schlitten 3 unmittelbar hinter der Stützrolle 4 angeordnet ist, wobei die zumindest teilweise angetriebenen Rollen dieser Rollenbahn nicht näher dargestellt sind.

Der Durchmesser der Stützrolle 4 beträgt zweckmäßigerweise etwa 60% des Durchmessers der Einlaufwalze 1. Der Schlitten 3 ist ferner mit einer Traverse 5 versehen, die so hoch über den Schlitten hinausragt, daß ein abzustapelnder Stapel 9 plattenförmiger Werkstücke 13 maximaler Höhe zwischen der Traverse 5 und der Stützrolle 4 sicher hindurchpaßt.

An der Traverse 5 ist ein Anschlag 6 angelenkt, der aus- und einrückbar ist. In eingerücktem Zustand befindet sich dessen Anschlagfläche 7 parallel zur senkrechten Mittellinie 8 der Stützrolle 4 und zwischen dieser Mittellinie 8 und der senkrechten der Einlaufwalze 1 nahen Tangente 17 der Stützrolle 4.

Der Abstand der Anlagefläche 7 zur Mittellinie der Stützrolle 4 beträgt zweckmäßigerweise 40% des Radiusses der Stützrolle 4. Der Anschlag 6 reicht mit seiner Anlagefläche 7 fast an die Stützrolle 4 heran. Der Anschlag 6 kann rechenartig ausgebildet sein und im Falle einer aus mehreren Einzelrollen bestehenden Stützrolle 4 in die Zwischenräume zwischen den Einzelrollen eingreifen. In Bewegungsrichtung der Stapel ist hinter der Einlaufwalze 1 ein höhenverstellbarer Ablagetisch 10 angeordnet, der in der Zeichnung nicht näher dargestellt ist.

Die Wirkungsweise der Vorrichtung ist folgende, wobei das Abstapeln eines Plattenpaketes beschrieben wird.

Der von der Aufteilsäge kommende Stapel wird über die nicht dargestellte Rollenbahn zur Einlaufwalze 1 bewegt und von dieser weiterbewegt, bis dessen Vorderkante gegen die Anlagefläche 7 des Anschlages zur Anlage kommt. In diesem Augenblick, bzw. mit einer geringfügigen Zeitverzögerung, die eine Anlage aller Einzelplatten an der Anlagefläche 7 unterstützt, beginnt der Schlitten 3 mit dem Anschlag 6 und der Stützurolle 4 sich von der Einlaufwalze 1 wegzubewegen. Eine geringfügige Zeitverzögerung der Bewegung des Schlittens 3 ist dabei mit einem ebenso geringfügigen Schlupf zwischen Plattenstapel und Einlaufwalze 1 verbunden, der beim weiteren Stapelvorgang nicht mehr auftreten darf. Mit dem Beginn der Bewegung des Schlittens 3 , der in der Zeichnung mit Position a gekennzeichnet ist, wird die Andrückrolle 2 auf die obere Platte des Stapels aufgefahren, wodurch die Lage der Einzelplatten zueinander stabilisiert und die Erhöhung des Gleitwiderstandes zwischen der untersten Platte und der Einlaufwalze erreicht werden. Erfindungswesentlich ist es, daß sich der Schlitten 3 mit einer Geschwindigkeit von der Einlaufwalze 1 wegbewegt, die exakt der Umfangsgeschwindigkeit der Einlaufwalze 1 entspricht.

Kurz nachdem durch die Bewegung des Stapels dessen Masseschwerpunkt in dem Bereich zwischen der Einlaufwalze 1 und der Stützrolle 4 gelangt, erfolgt ein leichtes Abkippen des Stapels, wodurch die vordere untere Schnittkante der untersten Einzelplatte zur Anlage an die Stützrolle 4 kommt. Diese Situation ist in der Zeichnung mit Position b gekennzeichnet.

Die gleichförmige Bewegung des Stapels erfolgt solange, bis die hinterste Kante des Stapels die vertikale Mittellinie der Einlaufwalze 1 passiert hat. In dieser mit Position c gekennzeichneten Stellung beginnt eine Verzögerung der Horizontalbewegung des Plattenstapels und eine Überleitung desselben in die Vertikalbewegung. Die hinterste Kante liegt dabei an der Einlaufwalze 1 an und vollzieht mit dieser eine kreisförmige Bewegung. Da sich der Schlitten 3 weiterhin mit unverminderter Geschwindigkeit von der Einlaufwalze 1 wegbewegt, beginnt mit der Verzögerung der Horizontalbewegung eine Drehung der Stützrolle 4 entgegen der Drehrichtung der Einlaufwalze 1.

Die Verzögerung der Horizontalbewegung und gleichzeitige Bewegung der Vertikalbewegung des Plattenstapels, die mit einem leichtem Kippen des Stapels entgegen der zuvor beschriebenen Kippbewegung verbunden ist, erfolgt solange, bis der geringste Abstand zwischen den Mantelflächen der Einlaufwalze 1 und Stützrolle 4 nahezu dem horizontalen Maß der abzustapelnden Platten, d.h. deren Länge entspricht. In diesem Augenblick, der in der Zeichnung mit Position d beschrieben ist, ist die Horizontalbewegung beendet, und der Plattenstapel fällt auf den darunter angeordneten Ablagetisch 10 . Der Ablagetisch 10 ist dabei soweit angehoben worden, daß die Fallhöhe nur einige Zentimeter beträgt.

Im Bereich der naheliegenden senkrechten Tangenten der Einlaufwalze 1 und der Stützrolle 4 können nach unten weisende blattförmige Federelemente vorgesehen sein, die leicht zueinander geneigt sind und eine exakte Führung des absinkenden Plattentapels unterstützen.

Nach dem Absinken des Plattenstapels auf den Ablagetisch wird dieser um einen Betrag abgesenkt, der der Höhe des abgelegten Paketes entspricht. Daraufhin wird der Schlitten 3 mit erhöter Geschwindigkeit in seine Ausgangsposition zurückgefahren und das Abstapeln des nächsten Paketes kann beginnen.

Mit der Vorrichtung können auch mehrere parallele Stapel gleicher Länge, unterschiedlicher oder gleicher Breite abgestapelt werden. Es ist aber auch möglich, in einer Vorrichtung parallele Stapel unterschiedlicher Länge zu handhaben. Dazu ist es notwendig, daß die Stützrolle 4 aus mehreren im Abstand zueinander angeordneten schmalen Eizelrollen gebildet ist und diese unabhängig voneinander auf einer Achse frei drehbar sind. Zwei verschiedenen Stapelpakete dürfen dabei nicht gleichzeitig auf einer Einzelrolle abgestützt sein.

Es ist je nach Kompliziertheit des abzustapelnden Aufteilbildes und eine ggf. erfolgten Querauteilung desselben möglich, mehrere Vorrichtungen hinter- und nebeneinander anzuordnen. Bei einer Anordnung hintereinander muß die vordere bzw, müssen die vorderen Vorrichtungen zum Stapeln, die vor der wirksam werdenden Vorrichtung liegen, überfahrbar sein. Dazu ist es lediglich notwendig, den Anschlag 6 bis in den Bereich der Höhe der Traverse 5 auszurücken. Die nachfolgnd abzustapelnden Pakete können dann über die Einlaufwalze 1, die in der Ausgangsstellung befindliche Stützrolle 4 und die nicht dargestellte Rollenbahn des Schlittens 3 zur nächsten Vorrichtung transportiert werden.

Die Vorteile der Erfindung sind insbesondere darin zu sehen, daß hohe Stapelleistungen erreichbar sind, da vor dem Stapeln der horizontale Werkstücktransport nahezu kontinuierlich erfolgen kann, zusätzliche Werkstückbewegungen und eine Queraufteilung auch bei komplizierten Aufteilbildern kaum notwendig sind.

Vorteilhaft ist es vor allem auch, daß plattenförmige Werkstücke unterschiedlichster Längen- und Breitenabmessungen gehandhabt werden können, ohne daß auch nur minimale Umrüstarbeiten notwendig sind. Hinzu kommt, daß die Abstapelung platzsparend erfolgen kann und Werkstücke mit beschichteter Oberfläche ohne Beschädigungen gestapelt werden können.

**Bezugszeichen**

| | |
|---|---|
| 1 | Einlaufwalze |
| 2 | Andrückrolle |
| 3 | Schlitten |
| 4 | Stützrolle |
| 5 | Traverse |
| 6 | Anschlag |
| 7 | Anlagefläche |
| 8 | Mittellinie |
| 9 | Stapel |

| | |
|---|---|
| 10 | Ablagetisch |
| 11 | Rollenbahn |
| 12 | Rolle |
| 13 | Einzelplatte |
| 13a | oberste Einzelplatte |
| 13b | unterste Einzelplatte |
| 14 | hintere, untere Kante |
| 15 | Welle |
| 16 | Welle |
| 17 | senkrechte Tangente |
| 18 | Bewegungsrichtung |
| 19 | Hin- und Herbewegung |
| a, b, c, d | Positionen des Stapels |

## Patentansprüche

1. Vorrichtung zum Stapeln plattenförmiger Werkstücke, insbesondere plattenförmiger Werkstückstapel, dadurch gekennzeichnet, daß eine mit einer rutschfesten Oberfläche versehene, angetriebene Einlaufwalze (1) vorgesehen ist, daß in Bewegungsrichtung (18) der Werkstücke (9) hinter der Einlaufwalze (1) ein von dieser horizontal weg- und zurückbewegbarer (19) Schlitten (3) vorgesehen ist, der bei Wegbewegung mit einer der Umfangsgeschwindigkeit der Einlaufwalze (1) synchronen Geschwindigkeit bewegbar ist, daß dem Schlitten (3) an dem der Einlaufwalze (1) zugewandten Ende eine Stützrolle (4) und ein mit einer Anlagefläche (7) versehener Anschlag (6) zugeordnet sind, wobei die Anlagefläche (7) des Anschlags (6) bis nahe an die Stützrolle (4) heranreicht und parallel zu der senkrechten Mittellinie (8) der Stützrolle (4) und zwischen dieser und der der Einlaufwalze (1) nahen Tangente (17) der Stützrolle (4) im wesentlichen senkrecht verläuft, und daß in Bewegungsrichtung unmittelbar hinter der Einlaufwalze (1) ein von dem Schlitten (3) mit der Stützrolle (4) überfahrbarer Ablagetisch (10) vorgesehen ist.

2. Vorrichtung nach Anspruch 1, dadurch gekennzeichnet, daß die dem Schlittten (3) zugeordnete Stützrolle (4) frei drehbar ist.

3. Vorrichtung nach den Ansprüchen 1 und 2, dadurch gekennzeichnet, daß die Stützrolle (4) mit einer rutsch- und abriebfesten Oberfläche versehen ist.

4. Vorrichtung nach den Ansprüchen 1 bis 3, dadurch gekennzeichnet, daß der Einlaufwalze (1) eine höhenbewegliche Andrückrolle (2) zugeordnet ist.

5. Vorrichtung nach den Ansprüchen 1 bis 4, dadurch gekennzeichnet, daß dem Schlitten (3) in Bewegungsrichtung eine Rollenbahn (11) nachgeordnet ist.

6. Vorrichtung nach den Ansprüchen 1 bis 5, dadurch gekennzeichnet, daß die obersten, horizontal verlaufenden Tangenten der Einlaufwalze (1), der Stützrolle (4) und der Rollen (12) der Rollenbahn (11) in einer Ebene liegen.

7. Vorrichtung nach den Ansprüchen 1 bis 6, dadurch gekennzeichnet, daß dem Schlitten (3) eine den Durchlauf der Werkstücke (9) gestattende Traverse (5) zugeordnet und der Anschlag (6) an der Traverse (5) befestigt ist.

8. Vorrichtung nach den Ansprüchen 1 bis 7, dadurch gekennzeichnet, daß Anschlag (6) an der Traverse (5) ein- und ausrückbare angelenkt ist.

9. Vorrichtung nach den Ansprüchen 1 bis 8, dadurch gekennzeichnet, daß der Durchmesser und der durch die Druckbeaufschlagung zurücklegbare Weg der Andrückrolle (2) in Richtung der Einlaufwalze (1) so dimensioniert sind, daß deren Mantelfläche so lange an dem Plattenstapel anliegt, bis dessen hintere untere Kante mit der Einlaufwalze (1) einen kreisförmigen Weg zurückgelegt hat, der einer Drehung der Einlaufwalze um etwa 15° entspricht.

10. Vorrichtung nach den Ansprüchen 1 bis 9, dadurch gekennzeichnet, daß der Durchmesser der Stützrolle (4) etwa 60% des Durchmessers der Einlaufwalze (1) beträgt.

11. Vorrichtung nach den Ansprüchen 1 bis 10 dadurch gekennzeichnet, daß die Anlagefläche (7) in Einrückstellung des Anschlages (6) in einem Abstand von etwa 40% des Radiusses der Stützrolle (4) von der senkrechten Mittellinie derselben angeordnet ist.

12. Vorrichtung nach den Ansprüchen 1 bis 11, dadurch gekennzeichnet, daß die Einlaufwalze (1) und die Stützrolle (4) aus im Abstand zueinander stehenden und gemeinsam drehbaren koaxialen Einzelwalzen bzw. Einzelrollen gleichen Durchmessers zusammengesetzt sind.

13. Vorrichtung nach den Ansprüchen 1 bis 12, dadurch gekennzeichnet, daß die Stützrolle (4) aus im Abstand zueinander stehenden koaxialen Einzelrollen gleichen Durchmessers zusammengesetzt ist, die unabhängig voneinander drehbar sind.

# EUROPÄISCHER RECHERCHENBERICHT

Nummer der Anmeldung

## EP 91 25 0046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X<br>P,A | DE-A-4 019 567  (VEB RADIOTECHNIK)<br>  (iNSGESAMT)<br>– – – | 1-4<br>6-13 | B 65 G 59/06<br>B 65 G 57/06 |
| A | FR-A-2 456 063  (S.A.MARTIN)<br>* Seite 6, Zeile 7 - Seite 7, Zeile 14; Abbildungen 9-16 * *<br>– – – | 1,2 | |
| A | DE-A-2 645 186  (WEINIG)<br>* Seite 5; Abbildungen * *<br>– – – | 1,2,6,7 | |
| A | US-A-4 624 616  (FREESE)<br>* Spalte 3, Zeile 23 - Zeile 28; Abbildungen * *<br>– – – | 1,3,6,12,<br>13 | |
| A | DE-B-1 949 909  (VE WISSENSCHAFTLICH-<br>TECHNISCHER BETRIEB KERAMIK)<br>* Spalte 3, Zeile 5 - Zeile 16; Abbildungen 1,2,5 * *<br>– – – | 1-3,6 | |
| A | EP-A-0 104 149  (B.S.P. PACKAGING)<br>* Seite 13, Zeile 27 - Seite 14, Zeile 11; Abbildung 4 * *<br>– – – – – | 1,3,6 | |

| RECHERCHIERTE SACHGEBIETE (Int. Cl.5) |
|---|
| B 54 G<br>B 65 G |

Der vorliegende Recherchenbericht wurde für alle Patentansprüche erstellt

| Recherchenort | Abschlußdatum der Recherche | Prüfer |
|---|---|---|
| Den Haag | 09 Dezember 91 | NEVILLE D.J. |